# EUROPÄISCHE PATENTSCHRIFT

(11) **EP 2 234 932 B1**
(45) Veröffentlichungstag und Bekanntmachung des Hinweises auf die Patenterteilung: **03.08.2011**
(21) Anmeldenummer: 09701257.9
(22) Anmeldetag: 09.01.2009
(51) Int. Cl.: C04B 22/12, C04B 35/10

(54) **ADDITIV ZUR BILDUNG EINER KORROSIONSSCHUTZSCHICHT AUF EINER FEUERFESTEN AUSKLEIDUNG EINES EINE ALUMINIUMLEGIERUNGSSCHMELZE ENTHALTENDEN SCHMELZOFENS**
ADDITIVE FOR FORMING A CORROSION-PROTECTION LAYER ON A REFRACTORY CLADDING OF A MELT FURNACE CONTAINING AN ALUMINIUM ALLOY MELT
ADDITIF POUR LA FORMATION D'UNE COUCHE ANTICORROSION SUR UN REVÊTEMENT RÉFRACTAIRE D'UN FOUR DE FUSION CONTENANT UNE FONTE D'ALLIAGE D'ALUMINIUM

(30) Priorität: 09.01.2008 DE 102008003640
(43) Veröffentlichungstag der Anmeldung: 06.10.2010
(73) Patentinhaber: Refratechnik Steel Gmbh, 40549 Düsseldorf (DE)
(72) Erfinder: KESSELHEIM, Bertram, 53557 Bad Hönningen (DE); JANSEN, Helge, 37133 Friedland (DE); SCHEMMEL, Thomas, 37127 Dransfeld (DE)
(74) Vertreter: Solf, Alexander
(86) Internationale Anmeldenummer: PCT/EP2009/000093
(87) Internationale Veröffentlichungsnummer: WO 2009/087111

(56) Entgegenhaltungen:
- WO-A-96/41778
- GB-A- 2 147 893
- GB-A- 2 159 144
- US-A- 3 519 474
- US-A- 4 126 474
- ÉNTIN S V ET AL: "New refractory materials for the aluminum industry" REFRACTORIES AND INDUSTRIAL CERAMICS, KLUWER ACADEMIC PUBLISHERS-CONSULTANTS BUREAU, NE, Bd. 47, Nr. 2, 1. März 2006 (2006-03-01), Seiten 98-100, XP019406485 ISSN: 1573-9139
- DATABASE COMPENDEX [Online] ENGINEERING INFORMATION, INC., NEW YORK, NY, US; AFSHAR S ET AL: "Furnaces: Improving low cement castables by non-wetting additives" XP002526583 Database accession no. E2001496753259 & JOM AUGUST 2001 MINERALS, METALS AND MATERIALS SOCIETY US, Bd. 53, Nr. 8, August 2001 (2001-08), Seiten 24-27,
- DATABASE COMPENDEX [Online] ENGINEERING INFORMATION, INC., NEW YORK, NY, US; ALLAHVERDI M ET AL: "Effect of BaSO4, CaF2, and AlF3 as well as Na2O on aluminosilicates having a mullite-like composition" XP002526584 Database accession no. EIX98033942993 & CANADIAN CERAMICS QUARTERLY 1997 AUG CANADIAN CERAMIC SOC, Bd. 66, Nr. 3, August 1997 (1997-08), Seiten 223-230,
- HEMRICK J E ET AL: "Development and Applications of refractory materials for molten aluminum applications" INTERNATIONAL JOURNAL OF APPLIED CERAMIC TECHNOLOGY, BLACKWELL PUBLISHING,, MALDEN, MA, US, Bd. 5, Nr. 3, 1. Januar 2008 (2008-01-01), Seiten 265-277, XP009116387 ISSN: 1546-542X
- SHIELDS T C ET AL: "YBCO thick films on alumina substrates with BaSO4/BaF2 barrier layers" PHYSICA C, NORTH-HOLLAND PUBLISHING, AMSTERDAM, NL, Bd. 213, Nr. 3-4, 15. August 1993 (1993-08-15), Seiten 338-344, XP024468371 ISSN: 0921-4534 [gefunden am 1993-08-15]

## Beschreibung

Aluminiumlegierungen entstehen durch Legieren von Aluminium mit anderen Metallen vorwiegend mit Mangan, Magnesium, Kupfer, Silizium, Nickel, Zink und Beryllium. Auf diese Weise lassen sich Festigkeitswerte in weiten Grenzen erhöhen und auch andere Eigenschaften beeinflussen.

Das Legieren wird in Schmelzöfen bzw. Warmhalteöfen, in denen eine Aluminiumschmelze mit den Legierungsmitteln versetzt wird, durchgeführt. Das Legieren erfolgt bei Schmelzbadtemperaturen bis etwa 850°C, weshalb die Schmelzöfen mit einem feuerfesten, meist monolithischen, aluminosilikatischen Material (refractory castable), z. B. mit einem Feuerbeton, feuerraumseitig ausgekleidet sind. Dieses Material bzw. diese Betone sind nicht nur bei Temperaturen um 840°C, sondern zumindest bis 1200°C temperaturbeständig. Die Zusammensetzung dieser Betone ist bekannt. In der Regel wird aus mindestens einem feuerfesten Bindemittel, z.B. Tonerdezement, mindestens einem feuerfesten Zuschlagstoff, z. B. Bauxit, Wasser und ggf. Zusatzmitteln, z. B. zur Regelung des Abbindens des Zements oder zur Verbesserung der Fließfähigkeit, zu einem bildsamen Frischbeton gemischt und der bildsame Frischbeton auf die Innenfläche des Schmelzofens aufgebracht. Die Erhärtung zu einem Festfeuerbeton ergibt die feuerseitige, feuerfeste Auskleidungsschicht des Schmelzofens.

Aluminiumlegierungsschmelzen reagieren insbesondere mit im aluminosilikatischen Material der feuerfesten Auskleidung enthaltenen Bestandteilen, z. B. darin enthaltener freier Kieselsäure (SiO₂) und enthaltenen Silikaten wie Mullit derart, dass das Gefüge der Auskleidung im Oberflächenbereich zerstört wird bzw. korrodiert.

Zur Vermeidung der Gefügezerstörungen durch die Kontaktreaktionen ist es bekannt, den feuerfesten Bindemitteln oder den frisch angemachten Feuerbetonen als Korrosionsschutzmittel ein sogenanntes Anti Wetting Additiv zuzusetzen, das mit Bestandteilen der Aluminiumlegierungsschmelze eine dünne Schutzschicht auf der Oberfläche des Auskleidungsmaterials bildet, die eine Kontaktierung der Schmelze mit dem Auskleidungsmaterial behindert. Als Korrosionsschutzmittel werden üblicherweise Calciumfluorid (CaF₂) bis 2,5 Gew.-%, oder ein aus natürlichem Schwerspat erzeugtes, als Verunreinigung CaF₂ in Mengen zwischen 1 und 4 Gew.-% enthaltendes Bariumsulfat (BaSO₄) bis 15 Gew.-% zuzugeben.

Diese Korrosionsschutzmittel wirken zuverlässig im Bereich der Auskleidung unterhalb der Schmelzbadoberfläche, wo Temperaturen zwischen z. B. 760 bis maximal 840°C vorherrschen. Auch oberhalb der Schmelzbadoberfläche, z. B. wenn der Schmelzbadspiegel durch Entnahme von Schmelze sinkt und die gebildete Schutzschicht der Ofenatmosphäre ausgesetzt ist, bleibt die Schutzschicht erhalten, wenn die Temperaturen der Ofenatmosphäre unter etwa 950°C bleiben. Oberhalb etwa 950°C zersetzen sich die Schutzschicht und auch die Additive im Auskleidungsmaterial, wobei zudem die Zersetzungsprodukte das feuerfeste Auskleidungsmaterial zumindest schwächen, insbesondere aber die Anwendungsgrenze deutlich reduzieren.

Mehr und mehr werden Schmelzöfen verwendet, die oberhalb des Schmelzbades mit energieeffizienteren Regenerativbrennern arbeiten, wobei Oberflächentemperaturen an den Seitenwänden der Öfen über 1450°C auftreten. Dadurch werden die Additive und insbesondere die Schutzschichten zersetzt, die bei Absenkung des Schmelzbadspiegels der heißeren Ofenbadatmosphäre ausgesetzt werden. Beim Auffüllen des Schmelzbades gelangen diese Zonen, die keine Schutzschicht mehr aufweisen, in Kontakt mit der Schmelze, woraus die beschriebenen Korrosionsreaktionen zwischen Schmelze und feuerfestem Material der Auskleidung resultieren.

In der Publikation: S.V. Entin et Al; "New Refractory Materials for the Aluminum Industry"; Refractories and Industrial Ceramics; Bd. 47; Nr. 2, 01/03/2006, p. 98-100 (XP019406485) werden die Eigenschaften feuerfester Giessmassen auf der Basis von Andalusit mit Giessmassen enthaltend Bariumsulfat und Kalzium - oder Aluminiumfluoride verglichen.

In der Publikation: Saied Afshar et Al; "Furnaces: Improving Low Clement Castables by Non-Wetting Additives"; Chemistry and Materials Science; JOM Journal of the Minerals, Metal and Materials Society, Vol. 53, No 8, p. 24-27; wird der Einfluss von "Non-Wetting* Additiven, enthaltend BaSO₂ und CaF₂ und/oder AlF₃ auf den Korrosionsschutz einer feuerfesten Auskleidung diskutiert.

Aufgabe der Erfindung ist, ein Anti Wetting Additiv bzw. Anti-Benetzungsmittel der eingangs beschriebenen Art zur Bildung einer Schutzschicht zu schaffen, das sich bei Temperaturen bis mindestens 1450°C nicht zersetzt und eine Schutzschicht durch Kontaktreaktionen mit Schmelzbadbestandteilen bildet, die Temperaturen einer Ofenatmosphäre bis mindestens 1450°C ohne Zerstörung aushält. Dabei dürfen die physikalischen Eigenschaften des feuerfesten Materials durch das Mittel nicht beeinträchtigt werden. Außerdem soll das Mittel preiswert sein.

Diese Aufgabe wird durch ein feinteiliges bzw. pulverförmiges trockenes Gemisch aus
a) einem Fluorid aus der Gruppe:
   Aluminiumfluorid (AlF₃)
   Bariumfluorid (BaF₂)
   Strontiumfluorid (SrF₂)
   und
b) einem synthetisch hergestellten, insbesondere Calciumfluorid freien Bariumsulfat (BaSO₄)
gelöst.

Vorzugsweise wird als Komponente a) Bariumfluorid verwendet. Die Korngröße des Gemisches liegt z. B. bei 100 Gew.-% kleiner 60 µm.

Ein synthetisch hergestelltes Bariumsulfat unterscheidet sich vom aus natürlichen Vorkommen stammenden Schwerspat erzeugten Bariumsulfat durch das Fehlen des den natürlichen Schwerspat verunreinigenden Calciumfluorids. Es ist das Verdienst der Erfindung festgestellt zu haben, dass im Wesentlichen das Calciumfluorid des natürlichen Bariumsulfats verantwortlich ist für die Unbrauchbarkeit dieses Produkts bei Temperaturen über 840°C. Das Calciumfluorid gewährleistet dagegen unterhalb 840°C die Bildung der Schutzschicht bzw. Grenzschicht.

Mit einer Mineralphasenanalyse unter Verwendung einer Mikrosondenanalyse kann man eindeutig nachweisen, ob in einem Gemisch ein natürlich gefälltes Bariumsulfat oder ein synthetisch hergestelltes, Calciumfluorid freies Bariumsulfat verwendet worden ist.

Vorteilhaft ist, das erfindungsgemäße Mittel mit folgenden Zusammensetzungen zu verwenden:
Synthetisch hergestelltes Bariumsulfat: 40 bis 80, insbesondere 50 bis 75 Gew.-%,
Fluorid gemäß Erfindung: 20 bis 60, insbesondere 25
bis 50 Gew.-%

Das erfindungsgemäße Additiv kann als Gebinde auf dem Markt den Anwendern zur Verfügung gestellt werden. Die Anwender setzen das erfindungsgemäße Additiv dann z. B. einer Frischbetonmischung zur Herstellung einer feuerfesten Auskleidung zu.

Eine Ausführungsform der Erfindung sieht vor, das Additiv einem mineralischen, feuerfesten Bindemittel zuzusetzen, und zwar in Mengen von 2,0 bis 7,5, insbesondere von 3 bis 6 Gew.-% und das insoweit fertige mineralische feuerfeste Bindemittel, z. B. in Form von Tonerdezement, abgepackt oder lose auf den Markt zu bringen.

Zweckmäßigerweise wird mit dem Additiv eine Betontrockenmischung, insbesondere eine Feuerbetontrockenmischung, hergestellt, die z. B. ein feuerfestes Bindemittel und feuerfeste Zuschlagstoffe, insbesondere aluminareiche Zuschlagstoffe, in üblichen Mengen enthält, wobei das Additiv in Mengen von 1 bis 5, insbesondere von 1,5 bis 4,5 Gew.-% vorhanden ist.

Das erfindungsgemäße Additiv kann aber auch beim Anmischen eines Frischfeuerbetons zugegeben werden und somit an der Einbaustelle des Frischbetons homogen untergemischt werden. Zusatzmengen zum Frischbeton betragen z. B. von 1 bis 5, insbesondere von 1,5 bis 4,5 Gew.-% bezogen auf die trockene Betonmischung. Zweckmäßigerweise wird erfindungsgemäß ein mineralisches feuerfestes Bindemittel verwendet, das frei ist an freiem CaO oder kein oder nur sehr wenig CaO freisetzt beim Abbinden bzw. bei der Hydratation mit Wasser. Bindemittel dieser Art sind z. B. Tonerdezemente, insbesondere kalkarme Tonerdezemente.

Vorteilhaft ist, das erfindungsgemäße Additiv in Kombination mit einer z. B. trockenen hoch dispersen Kieselsäure z. B. mit Mikrosilika oder pyrogener Kieselsäure od. dgl. zu verwenden. Dies kann derart erfolgen, dass Mikrosilika, bestehend aus überwiegend amorphem Siliciumdioxid aus der Silicium- und/oder Ferrosiliciumherstellung, dem erfindungsgemäßen Additiv zugesetzt und damit vermischt wird.

Die hoch disperse Kieselsäure, insbesondere Mikrosilika, kann aber auch dem mineralischen feuerfesten Bindemittel z. B. in Mengen bis 2,5 Gew.-%, insbesondere von 0,5 bis 2 Gew.-% beigegeben werden.

Die hoch disperse Kieselsäure muss so feinteilig sein und zumindest der Feinteiligkeit von Mikrosilika entsprechen, dass eine freie CaO-Komponente aus dem mineralischen feuerfesten Bindemittel, die herstellungsbedingt im trockenen Bindemittel vorhanden ist oder bei der Abbindung des Bindemittels, z. B. des Zements in wässrigen Mischungen freigesetzt wird, gebunden wird, indem die Kieselsäure mit der CaO-Komponente Calciumhydrosilikate bildet, die im Reaktionssystem mit der Aluminiumlegierungsschmelze unschädlich sind.

In Kombination mit der Verwendung eines erfindungsgemäßen Additivs und eines oben genannten mineralischen feuerfesten Bindemittels ist vorteilhaft, zur Herstellung einer trockenen Feuerbetonmischung oder eines Frischfeuerbetons aluminareiche bzw. hochtonerdehaltige, insbesondere dichtgebrannte Zuschlagstoffgranulate, z. B. aus refraktärem Bauxit, Normalkorund, Edelkorund und/oder Tabulartonerde zu verwenden. Diese Zuschlagstoffe sorgen auch dafür, dass eine Korrosion der Auskleidung durch Kontaktreaktion mit Aluminiumlegierungen unterbunden bzw. verzögert wird.

Insbesondere in Kombination mit Mikrosilica wird erfindungsgemäß in einem Feuerbeton anstelle eines Zements als anorganisches Bindemittel ein flüssiges chemisches Bindemittel zugesetzt, das mit einem Reaktionspartner eines Feuerbetontrockenmörtels reagieren kann und durch eine Sol-Gel-Umwandlung eine Abbindung und Verfestigung bzw. Erhärtung des Betons bewirkt. Reaktionspartner sind z. B. pulverförmiges MgO oder Wasserglas. Zusatzmengen sind z. B. 0,05 bis 1,0 Gew.-% bezogen auf die Trockenkomponenten des Betons. Das Bindemittel ist z. B. ein flüssiges Kieselsol. Zusatzmengen sind z. B. 3,5 bis 8,5 Vol.-% bezogen auf die Trockenkomponenten des Betons.

Nach einer weiteren Ausführungsform der Erfindung wird das Additiv Mischungen zur Herstellung feuerfester Tonerde-Formsteine zugesetzt, die nach der Formgebung durch Pressen getrocknet und ggf. zwischen 850 und 1100, insbesondere zwischen 900 und 1000° C gebrannt werden. Nach dem Trocknen oder Brennen enthalten die Formsteine das Additiv unverändert in wirksamer Menge.

Geeignete Mischungen sind aluminareiche Mischungen mit aluminareichen Rohstoffgranulaten mit Al₂O₃-Gehalten z. B. über 65 % als feuerfeste Hauptkomponente sowie Bindeton als Plastifizierungsmittel für das Pressen. Diese Mischungen können auch noch einen an sich bekannten aluminareichen Elastifizierer, z. B. in Form von Andalusitgranulat enthalten, der durch Mikrorissbildung Temperaturwechselbeständigkeit der gebrannten Formsteine in an sich bekannter Weise verbessert bzw. gewährleistet.

Für die Bindung der Matrix der Formsteine wird als Bindemittel Phosphorsäure oder das bereits oben beschriebene Kieselsol plus Reaktionspartner verwendet, wobei im Falle der Verwendung von Phosphorsäure die geformten Steine nach der Formgebung und dem Trocknen bei den oben genannten Temperaturen gebrannt werden.

Als aluminareiche Rohstoffe werden z. B. refraktäre Tonerde, z. B. Tabulartonerde oder Korund, oder Schamotte, Andalusit, Sillimanit, Kyanit, oder Mullit verwendet. Als Bindetone dienen insbesondere Montmorillonite und Bentonite.

Für das Pressen der Mischungen werden Wassergehalte zwischen 2 und 8, insbesondere zwischen 3 und 6 Gew.-%, bezogen auf die Trockensubstanz, bevorzugt.

Der aluminareiche Rohstoff wird vorzugsweise mit folgenden Korngrößenverteilungen verwendet:

| **Korngröße in mm** | **Anteile in Gew.-%** |
|---|---|
| 0 - 1 | 15 - 35, insbes. 20 - 30 |
| 1 - 2 | 10 - 30, insbes. 15 - 25 |
| 2 - 4 | 10 - 30, insbes. 15 - 25 |
| Mehl (d₉₅ < 100 µm) | 10 - 30, insbes. 15 - 25 |

Die folgende Tabelle enthält bevorzugte Zusammensetzungen von Mischungen zur Herstellung von erfindungsgemäßen, das Additiv enthaltenden Formsteinen:

| **Rohstoff** | **Kornfraktion in mm** | **Tonerdestein A Menge in Gew.-%** | **Tonerdestein B Menge in Gew.-%** |
|---|---|---|---|
| Aluminareicher Rohstoff | 0 - 4 | 70 - 90, insb. 80 - 88 | 70 - 90, insb. 80 - 88 |
| Bindeton (Plastifizierer) | Mehl (d₉₅ < 100 µm) | 2 - 10, insb. 3 - 7 | 2 - 10, insb. 3 - 7 |
| Andalusit (Elastifizierer) | 0,5 - 2 | 0 - 8, insb. 2 - 5 | 0 - 8, insb. 2 - 5 |
| | | | |
| Bariumsulfat | Mehl (100 Gew.% < 63 µm) | 2 - 10, insb. 3 - 7 | 2 - 10, insb. 3 - 7 |
| Bariumfluorid | Mehl (100 Gew.% < 63 µm) | 0,1 - 5, insb. 0,3 - 1 | 0,1 - 5, insb. 0,3 - 1 |
| | **Summe** | 100 | 100 |

| **Bindemittel** | | | |
|---|---|---|---|
| Phosphorsäure | | 2 - 8, insb. 3 - 6* | |
| Kieselsol | | | 1 - 8*, insb. 2 - 6 |
| Reaktionspartner für Kieselsol | | | 0,05 - 1* |

| | | | |
|---|---|---|---|
| * bezogen auf die Trockenkomponenten der Mischung | | | |

Die Mischungen werden bei üblichen Pressdrücken von z. B. 300 bar zu Formsteinen gepresst. Die Trocknung erfolgt bei Temperaturen z. B. bis maximal 200° C.

Vorzugsweise wird der Mischung, die Kieselsol als Bindemittel enthält, kein Reaktionspartner zugesetzt. In diesem Fall reagiert das Kieselsol mit feinteiligem Aluminiumoxid des aluminareichen Rohstoffs. Die Reaktionsprodukte verfestigen die Formsteine derart, dass sie gehandhabt werden können, z. B. aufeinander gestapelt und versandt sowie in die Schmelzöfen eingebaut werden können. Der Einbau der Formsteine erfolgt z. B. nach Art einer Ringvermauerung z. B. ohne Mörtel oder die Steine werden vermörtelt mit z. B. mit einem feuerfesten Mörtel, der z. B. Tonerdezement enthält.

Mit der Erfindung ist es gelungen, ein sogenanntes Anti Wetting System für sogenannte "Refractory Castables" und geformte feuerfeste Steine zur Verfügung stellen zu können, das zumindest bis 1450°C anwendbar ist. Bis zumindest dieser Temperatur bleibt eine aus den Bestandteilen der Mischung in Kontaktreaktion mit Bestandteilen des Schmelzbades gebildete Grenzschicht bzw. Schutzschicht erhalten, wobei die Bestandteile des erfindungsgemäßen Mittels kombinatorisch wirken.

## Patentansprüche

1. Additiv zur Bildung einer Korrosionsschutzschicht auf der Oberfläche einer feuerfesten Auskleidung eines Aluminiumlegierungsschmelzofens beim direkten Kontakt des das Additiv enthaltenden Auskleidungsmaterials mit Bestandteilen einer sich im Schmelzofen befindenden Aluminiumlegierungsschmelze,
**dadurch gekennzeichnet,**
**dass** das Additiv
a) mindestens ein Fluorid aus der Gruppe der folgenden Fluoride:
Aluminiumflourid (AlF₃)
Bariumfluorid (BaF₂)
Strontiumfluorid (SrF₂)
und
b) ein synthetisch hergestelltes Calciumfluorid freies
Bariumsulfat (BaSO₄)
aufweist.

2. Additiv nach Anspruch 1,
**dadurch gekennzeichnet,**
**dass** das Fluorid Bariumfluorid ist.

3. Additiv nach Anspruch 1 oder 2,
**dadurch gekennzeichnet,**
**dass** das Additiv folgende Zusammensetzungen in Gew.-% aufweist:
Bariumsulfat: 40 bis 80, insbesondere 50 bis 75
Fluorid: 20 bis 60, insbesondere 25 bis 50

4. Feuerfestes mineralisches Bindemittel, verwendbar insbesondere zur Herstellung einer Feuerbetonauskleidung in einem Aluminiumlegierungsschmelzofen mit einer Beständigkeit bis mindestens 1450°C, enthaltend ein Additiv nach einem oder mehreren der Ansprüche 1 bis 3.

5. Bindemittel nach Anspruch 4,
**dadurch gekennzeichnet,**
**dass** es ein Tonerdezement oder ein flüssiges Kieselsol
ist.

6. Bindemittel nach Anspruch 5,
**dadurch gekennzeichnet,**
**dass** es ein kalkarmer Tonerdezement ist.

7. Bindemittel nach einem oder mehreren der Ansprüche 4 bis 6,
**dadurch gekennzeichnet,**
**dass** das Additiv in Mengen von 0,5 bis 6,0, insbesondere von 0,5 bis 3,5 Gew.-%, enthalten ist.

8. Bindemittel nach einem oder mehreren der Ansprüche 4 bis 7,
**dadurch gekennzeichnet,**
**dass** es eine hoch disperse, mit freiem CaO reaktionsfähige Kieselsäure enthält.

9. Bindemittel nach Anspruch 8,
**dadurch gekennzeichnet,**
**dass** die Kieselsäure Mikrosilika ist.

10. Bindemittel nach Anspruch 9,
**dadurch gekennzeichnet,**
**dass** Mikrosilika in einer Menge von 0,5 bis 3,5, insbesondere von 0,5 bis 2,5 Gew.-%, enthalten ist.

11. Bindemittel nach Anspruch 5 und 7 bis 10,
**dadurch gekennzeichnet,**
**dass** es als Kombination von flüssigem Kieselsol mit MgO und/oder Wasserglas vorliegt.

12. Feuerbetonmischung enthaltend ein insbesondere feuerfestes Bindemittel nach einem oder mehreren der Ansprüche 4 bis 11 sowie übliche Feuerbetonzuschlagstoffe und gegebenenfalls übliche Feuerbetonzusatzmittel.

13. Feuerbetonmischung nach Anspruch 12,
**dadurch gekennzeichnet,**
**dass** sie als feuerfesten Zuschlagstoff ein aluminareiches, dichtgebranntes Zuschlagstoffgranulat aufweist.

14. Feuerbetonmischung nach Anspruch 13,
**dadurch gekennzeichnet,**
**dass** der Zuschlagstoff refraktärer Bauxit, Normalkorund, Edelkorund und/oder Tabulartonerde ist.

15. Feuerbetonmischung nach einem oder mehreren der Ansprüche 12 bis 14,
**dadurch gekennzeichnet,**
**dass** er die Bindemittelkombination nach Anspruch 11 aufweist, wobei MgO und/oder Wasserglas in Mengen von 0,05 bis 1,0 Gew.-% und Kieselsol in Mengen von 3,5 bis 8,5 Vol.-% enthalten sind.

16. Feuerfester, aluminareicher Formstein, in der Matrix hauptsächlich aufweisend als feuerfeste Hauptkomponente mindestens einen körnigen aluminareichen Rohstoff mit üblicher Kornverteilung und mit Korngrößen z. B. bis 6 mm sowie gegebenenfalls einen körnigen aluminareichen Elastifizierer mit üblicher Kornverteilung und mit Korngrößen z. B. bis 4 mm und eine Phosphatbindung oder Kieselgelbindung,
**dadurch gekennzeichnet,**
**dass** der Formstein ein Additiv nach einem oder mehreren der Ansprüche 1 bis 3 in Mengen aufweist, die bei seiner Verwendung in einer Auskleidung eines Aluminiumlegierungsschmelzofens im Betrieb des Aluminiumlegierungsschmelzofens mit der Aluminiumlegierungsschmelze eine wirksame Korrosionsschutzschicht bildet.

17. Formstein nach Anspruch 16,
**dadurch gekennzeichnet,**
**dass** der aluminareiche Rohstoff eine refraktäre Tonerde, z. B. Tabulartonerde oder Korund und/oder Schamotte und/oder Andalusit und/oder Silimanit und/oder Kyanit und/oder Mullit ist und insbesondere in Mengen von 70 bis 90, vorzugsweise von 80 bis 88 Gew.-% vorhanden ist.

18. Formstein nach Anspruch 16 und/oder 17,
**dadurch gekennzeichnet,**
**dass** der Elastifizierer in Mengen von 1 bis 8, insbesondere von 2 bis 5 Gew.-%, vorhanden ist und vorzugsweise ein Andalusitgranulat ist.

19. Formstein nach einem oder mehreren der Ansprüche 16 bis 18,
**dadurch gekennzeichnet,**
**dass** ein Bindeton in der Matrix enthalten ist, vorzugsweise in Mengen von 2 bis 10, insbesondere von 3 bis 7 Gew.-%.

20. Formstein nach einem oder mehreren der Ansprüche 16 bis 19,
**dadurch gekennzeichnet,**
**dass** Bariumsulfat in Mengen von 2 bis 10, insbesondere von 3 bis 7 Gew.-%, und Bariumfluorid in Mengen von 0,1 bis 5, insbesondere von 0,3 bis 1 Gew.-%, enthalten sind.

21. Verfahren zur Herstellung eines Formsteins aus einer Mischung mit den Bestandteilen nach einem oder mehreren der Ansprüche 16 bis 20,
**dadurch gekennzeichnet,**
**dass** die Mischung geformt und anschließen getrocknet wird.

22. Verfahren nach Anspruch 21,
**dadurch gekennzeichnet,**
**dass** die Mischung als Bindemittel Phosphorsäure in Mengen von 2 bis 8, insbesondere von 3 bis 6 Gew.-%, bezogen auf die Trockensubstanz der Mischung aufweist und nach dem Formen der geformte Stein bei Temperaturen zwischen 850 und 1100, insbesondere zwischen 900 und 1000°C, gebrannt wird.

## Claims

1. Additive for the formation of a corrosion-protection layer on the surface of a refractory cladding of an aluminium alloy melt furnace with direct contact of the cladding material containing the additive with constituents of an aluminium alloy melt in the melt furnace,
**characterised in that**
the additive contains
a) at least one fluoride from the group of the following fluorides:
aluminium fluoride (AlF₃)
barium fluoride (BaF₂)
strontium fluoride (SrF₂)
and
b) a synthetically produced calcium fluoride-free barium sulphate (BaSO₄).

2. Additive according to claim 1,
**characterised in that**
the fluoride is barium fluoride.

3. Additive according to claim 1 or 2,
**characterised in that**
the additive has the following compositions in wt.%:
barium sulphate: 40 to 80, in particular 50 to 75
fluoride: 20 to 60, in particular 25 to 50.

4. Refractory mineral binder, which can be used in particular for the production of a refractory concrete cladding in an aluminium alloy melt furnace having a resistance of up to at least 1,450 °C, containing an additive according to one or more of claims 1 to 3.

5. Binder according to claim 4,
**characterised in that**
it is an aluminous cement or a liquid silica sol.

6. Binder according to claim 5,
**characterised in that**
it is an aluminous cement of low lime content.

7. Binder according to one or more of claims 4 to 6,
**characterised in that**
it contains the additive in amounts of from 0.5 to 6.0, in particular from 0.5 to 3.5 wt.%.

8. Binder according to one or more of claims 4 to 7,
**characterised in that**
it contains a highly disperse silica which is reactive with free CaO.

9. Binder according to claim 8,
**characterised in that**
the silica is microsilica.

10. Binder according to claim 9,
**characterised in that**
it contains microsilica in an amount of from 0.5 to 3.5, in particular from 0.5 to 2.5 wt.%.

11. Binder according to claim 5 and 7 to 10,
**characterised in that**
it is in the form of a combination of liquid silica sol with MgO and/or water-glass.

12. Refractory concrete mixture containing a binder, in particular a refractory binder, according to one or more of claims 4 to 11 and conventional refractory concrete aggregates and optionally conventional refractory concrete additives.

13. Refractory concrete mixture according to claim 12,
**characterised in that**
it contains as a refractory aggregate alumina-rich, vitreous aggregate granules.

14. Refractory concrete mixture according to claim 13,
**characterised in that**
the aggregate is refractory bauxite, normal corundum, white fused corundum and/or tabular alumina.

15. Refractory concrete mixture according to one or more of claims 12 to 14,
**characterised in that**
it contains the binder combination according to claim 11, MgO and/or water-glass being contained in amounts of from 0.05 o 1.0 wt.% and silica sol in amounts of from 3.5 to 8.5 vol.%.

16. Refractory, alumina-rich moulded block, chiefly containing in the matrix as the refractory main component at least one granular alumina-rich raw material with a conventional grain distribution and with grain sizes e.g. of up to 6 mm and optionally a granular alumina-rich elastifying agent with a conventional grain distribution and with grain sizes e.g. of up to 4 mm and a phosphate binding or silica gel binding,
**characterised in that**
the moulded block contains an additive according to one or more of claims 1 to 3 in amounts which, when it is used in a cladding of an aluminium alloy melt furnace, form an effective corrosion protection layer with the aluminium alloy melt during operation of the aluminium alloy melt furnace.

17. Moulded block according to claim 16,
**characterised in that**
the alumina-rich raw material is a refractory alumina, e.g. tabular alumina or corundum and/or chamotte and/or andalusite and/or silimanite and/or kyanite and/or mullite and is present in particular in amounts of from 70 to 90, preferably from 80 to 88 wt.%.

18. Moulded block according to claim 16 and/or 17,
**characterised in that**
the elastifying agent is present in amounts of from 1 to 8, in particular from 2 to 5 wt.% and is preferably andalusite granules.

19. Moulded block according to one or more of claims 16 to 18,
**characterised in that**
the matrix contains a binder clay, preferably in amounts of from 2 to 10, in particular from 3 to 7 wt.%.

20. Moulded block according to one or more of claims 16 to 19,
**characterised in that**
in contains barium sulphate in amounts of from 2 to 10, in particular from 3 to 7 wt.%, and barium fluoride in amounts of from 0.1 to 5, in particular from 0.3 to 1 wt.%.

21. Process for the production of a shaped block from a mixture with the constituents according to one or more of claims 16 to 20,
**characterised in that**
the mixture is shaped and then dried.

22. Process according to claim 21,
**characterised in that**
the mixture contains as a binder phosphoric acid in amounts of from 2 to 8, in particular from 3 to 6 wt.%, based on the dry substance of the mixture, and after moulding the moulded block is fired at temperatures of between 850 and 1,100, in particular between 900 and 1,000 °C.

## Revendications

1. Additif pour la formation d'une couche anticorrosion sur la surface du revêtement réfractaire d'un four de fusion d'alliage d'aluminium lors d'un contact direct du matériau de revêtement contenant l'additif avec des composants d'un alliage d'aluminium fondu se trouvant dans le four de fusion,
**caractérisé en ce que**
l'additif comporte
a) au moins un fluorure du groupe des fluorures suivants :
fluorure d'aluminium (AlF₃)
fluorure de baryum (BaF₂)
fluorure de strontium SrF₂)
et
b) un sulfate de baryum (BaSO₄ préparé synthétiquement, exempt de fluorure de calcium.

2. Additif selon la revendication 1,
**caractérisé en ce que**
le fluorure est un fluorure de baryum.

3. Additif selon la revendication 1 ou 2,
**caractérisé en ce que**
l'additif présente les compositions suivantes en % en poids :
sulfate de baryum : 40 à 80, en particulier 50 à 75
fluorure : 20 à 60, en particulier 25 à 50

4. Liant minéral réfractaire, utilisable en particulier pour la fabrication du revêtement d'un béton réfractaire dans un four de fusion d'alliage d'aluminium, avec une résistance jusqu'à au moins 1450 °C, contenant un additif selon une ou plusieurs des revendications 1 à 3.

5. Liant selon la revendication 4,
**caractérisé en ce que**
le liant est un ciment argileux ou un sol silicique liquide.

6. Liant selon la revendication 5,
**caractérisé en ce que**
le liant est un ciment argileux pauvre en calcium.

7. Liant selon une ou plusieurs des revendications 4 à 6,
**caractérisé en ce que**
l'additif est contenu en des quantités de 0,5 à 6,0, en particulier de 0,5 à 3,5 % en poids.

8. Liant selon une ou plusieurs des revendications 4 à 7,
**caractérisé en ce que**
il contient un acide silicique hautement dispersé, réactif avec du CaO libre.

9. Liant selon la revendication 8,
**caractérisé en ce que**
l'acide silicique est de la microsilice.

10. Liant selon la revendication 9,
**caractérisé en ce que**
la microsilice est contenue en une quantité de 0,5 à 3,5, en particulier de 0,5 à 2,5 % en poids.

11. Liant selon la revendication 5 et les revendications 7 à 10,
**caractérisé en ce que**
il se présente comme une combinaison de sol de silice liquide avec du MgO et/ou du verre soluble.

12. Mélange de béton réfractaire contenant un liant, en particulier réfractaire, selon une ou plusieurs des revendications 4 à 11, ainsi que des granulats habituels pour les bétons réfractaires et le cas échéant des additifs habituels pour les bétons réfractaires.

13. Mélange de béton réfractaire selon la revendication 12,
**caractérisé en ce que**
il contient comme granulat réfractaire un granulé riche en alumine cuit jusqu'à compactage.

14. Mélange de béton réfractaire selon la revendication 13,
**caractérisé en ce que**
le granulat est de la bauxite réfractaire, du corindon normal, du corindon gemme et/ou de l'argile feuilletée.

15. Mélange de béton réfractaire selon une ou plusieurs des revendications 12 à 14,
**caractérisé en ce que**
il comporte la combinaison de liants selon la revendication 11, le MgO et/ou le verre soluble étant présent(s) en des quantités de 0,05 à 1,0 % en poids et le sol de silice en des quantités de 3,5 à 8,5 % en poids.

16. Brique moulée réfractaire riche en alumine, comportant essentiellement dans la matrice comme composant réfractaire au moins une matière première grenue riche en alumine avec une répartition granulométrique courante et avec des tailles de grains, par exemple, jusqu'à 6 mm, ainsi que, le cas échéant un élastifiant grenu riche en alumine avec une répartition granulométrique courante et avec des tailles de grains, par exemple, jusqu'à 4 mm et une liaison par phosphates ou par gel de silice, **caractérisée en ce que**
la brique moulée comporte un additif selon l'une ou plusieurs des revendications 1 à 3, qui, lors de son utilisation dans le revêtement d'un four de fusion d'alliage d'aluminium, forme lors du fonctionnement du four de fusion d'alliage d'aluminium une couche anticorrosion efficace avec l'alliage d'aluminium fondu.

17. Brique moulée selon la revendication 16,
**caractérisée en ce que**
la matière première riche en alumine est une argile réfractaire, par exemple une argile feuilletée ou du corindon et/ou de la chamotte et/ou de l'andalousite et/ou de la silimanite et/ou de la kyanite et/ou de la mullite, et est présente en particulier en des quantités de 70 à 90, de préférence de 80 à 88 % en poids.

18. Brique moulée selon la revendication 16 et/ou la revendication 17,
**caractérisée en ce que**
l'élastifiant est présent en des quantités de 1 à 8, en particulier de 2 à 5 % en poids, et est de préférence un granulé d'andalousite.

19. Brique moulée selon une ou plusieurs des revendications 16 à 18,
**caractérisée en ce que**
une argile de liaison est contenue dans la matrice, de préférence en des quantités de 2 à 10, en particulier de 3 à 7 % en poids.

20. Brique moulée selon une ou plusieurs des revendications 16 à 19,
**caractérisée en ce que**
du sulfate de baryum y est contenu en des quantités de 2 à 10, en particulier de 3 à 7 % en poids et du fluorure de baryum en des quantités de 0,1 à 5, en particulier de 0,3 à 1 % en poids.

21. Procédé de fabrication d'une brique moulée en un mélange avec les composants selon une ou plusieurs des revendications 16 à 20,
**caractérisé en ce que**
le mélange est moulé, puis séché.

22. Procédé selon la revendication 21,
**caractérisé en ce que**
le mélange comporte comme liant de l'acide phosphorique en des quantités de 2 à 8, en particulier de 3 à 6 % en poids, rapportés à la substance sèche du mélange, et **en ce qu'**après le moulage, la brique moulée est cuite à des températures entre 850 et 1100, en particulier entre 900 et 1000 °C.
